Europäisches Patentamt

European Patent Office

Office européen des brevets

(19)

(11) Veröffentlichungsnummer: **0 196 716**
**B1**

(12) # EUROPÄISCHE PATENTSCHRIFT

(45) Veröffentlichungstag der Patentschrift:
29.08.90

(51) Int. Cl.⁵: **C03B 19/04, C03B 37/012**

(21) Anmeldenummer: **86200482.7**

(22) Anmeldetag: **21.03.86**

(54) Verfahren und Vorrichtungen zur Herstellung von Glaskörpern.

(30) Priorität: **29.03.85 DE 3511449**

(43) Veröffentlichungstag der Anmeldung:
**08.10.86 Patentblatt 86/41**

(45) Bekanntmachung des Hinweises auf die Patenterteilung:
**29.08.90 Patentblatt 90/35**

(84) Benannte Vertragsstaaten:
**DE FR GB IT NL SE**

(56) Entgegenhaltungen:
EP-A- 0 123 191
EP-A- 0 129 625
DE-A- 3 227 786
GB-A- 2 041 913
GB-A- 2 103 202
GB-A- 2 165 534

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **FR GB IT NL SE**

(72) Erfinder: **Clasen, Rolf, Dipl.-Phys., Dr.,
Schlossparkstrasse 36, D-5100 Aachen(DE)**
Erfinder: **Scholz, Heinz, Dipl.-Chem., Dr., Wolfshelde 14,
B-4721 Kelmis(DE)**

(74) Vertreter: **Nehmzow-David, Fritzi-Maria et al, Philips
Patentverwaltung GmbH
Wendenstrasse 35 Postfach 10 51 49,
D-2000 Hamburg 1(DE)**

**Beschreibung**

Die Erfindung bezieht sich auf ein Verfahren zur Herstellung von Glaskörpern, bei dem aus dem Ausgangsmaterial für den Glaskörper in Form einer Suspension ein poröser Grünkörper geformt und dieser anschließend getrocknet, gereinigt und gesintert wird.

Die Erfindung bezieht sich weiter auf Vorrichtungen zur Durchführung eines solchen Verfahrens.

Das eingangs genannte Verfahren ist insbesondere geeignet zur Herstellung von Vorformen für optische Wellenleiter.

Zur Herstellung von hochreinen Quarzglaskörpern, insbesondere Vorformen für optisches Wellenleiter, sind Verfahren bekannt, bei denen ein poröser Grünkörper aus hochdispersen $SiO_2$-Glasteilchen hergestellt wird, wonach dieser poröser Grünkörper zunächst in z.B. einer chlorhaltigen Atmosphäre bei Temperaturen im Bereich von 600 bis 900°C gereinigt wird. Die Sinterung zu kompaktem, transparentem Glas erfolgt dann bei Temperaturen im Bereich um 1500°C; die Höhe der Sintertemperatur ist abhängig von der Größe der $SiO_2$-Teilchen und der Homogenität des Grünkörpers.

Bei der Verarbeitung von hochdispersen Quarzglaspartikeln ist ein erheblicher apparativer Aufwand (Vorformen für die Herstellung eines handhabbaren Grünkörpers und Pressen für die Verdichtung dieses Grünkörpers) erforderlich, um schließlich einen Grünkörper zu erhalten, der die für eine effiziente Sinterung, d.h. Sinterung bei Temperaturen ≤ 1550°C zu einem blasen- und schlierenfreien Glaskörper, ausreichende hohe Dichte aufweist. Ein derartiges Verfahren zur Herstellung einer Vorform für optische Wellenleiter ist z.B. aus DE-PS 3 240 355 bekannt.

Aus GB-PS 1 010 702 ist ein Verfahren bekannt, bei dem Quarzglasfasern oder Quarzglasstäbe durch einen Strangpreßprozeß hergestellt werden. Hierzu wird eine $SiO_2$-Suspension durch Zusatz von Ammoniumverbindungen soweit in einen Gelzustand überführt, daß eine hochviskose Masse entsteht, die in einem Strangpreßprozeß direkt weiterverarbeitet werden kann.

Der Erfindung liegt die Aufgabe zugrunde, ein Verfahren und Vorrichtungen zur Herstellung von hochreinen Glaskörpern zu schaffen, mit denen ein Grünkörper erhalten wird, der porös genug ist, daß er in einem Zwischenerhitzungsschritt in einer mit vorliegenden Verunreinigungen reagierenden Gasatmosphäre gut gereinigt werden kann, der jedoch schon eine so hohe Verdichtung aufweist, daß der anschließende Sinterschritt ohne zusätzliche Verdichtungsmaßnahmen des Grünkörpers erfolgen kann.

Diese Aufgabe wird mit einem Verfahren der eingangs genannten Art dadurch gelöst, daß das Ausgangsmaterial in Form einer thixotropen Suspension in einem Formwerkzeug durch Einkopplung mechanischer Kräfte verflüssigt und danach der Einwirkung der mechanischen Kräfte entzogen wird, wonach das Ausgangsmaterial wieder verfestigt und in nunmehr geformtem Zustand als Grünkörper vorliegt.

Eine aus der GB-PS 1 010 702 bekannte Vorrichtung mit einem Behälter für die Aufnahme von Ausgangsmaterial zur Herstellung eines Glaskörpers mit einer Einfüllöffnung und mit einer der Einfüllöffnung vertikal gegenüberliegenden Austrittsöffnung für das im Behälter befindliche Material mit einem Querschnitt, der die Form des herzustellenden Glaskörpers bestimmt, und mit einem in die Einfüllöffnung hineinpassenden Stempel, der das im Behälter befindliche Ausgangsmaterial formschlüssig kontaktiert und der in Richtung auf die Austrittsöffnung verschiebbar ist, ist zur Durchführung des obengenannten Verfahrens gekennzeichnet durch eine mit einem Abdeckteil verschließbare Austrittsöffnung und einen mit einem Schall- oder Ultraschallgenerator gekoppelten Stempel.

Zwei weitere, neuartige Vorrichtungen zur Durchführung dieses Verfahrens sind gekennzeichnet durch

1. ein mit einem Schall- oder Ultraschallgenerator verkoppeltes Gefäß, das ein Medium enthält, in das ein Schall- oder Ultraschallfeld einkoppelbar ist, in welches eine die Form des herzustellenden Glaskörpers bestimmende Form zur Aufnahme von Ausgangsmaterial einbringbar ist oder

2. eine die Form des herzustellenden Glaskörpers bestimmende Form mit einer Einfüllöffnung, mit einer der Einfüllöffnung vertikal gegenüberliegenden Austrittsöffnung, mit einem an der Innenwandung der Form anliegenden, an seinem unteren Ende an der Austrittsöffnung der Form verschlossenen Futter, in das Ausgangsmaterial für den Glaskörper einfüllbar ist und das an seinem oberen, offenen Ende mit einem in das Futter hineinpassenden, mit einem Schall- oder Ultraschallgenerator verkoppelten, das Ausgangsmaterial formschlüssig kontaktierenden Stempel abschließbar ist.

Nach vorteilhaften Weiterbildungen des Verfahrens gemäß der Erfindung wird als Ausgangsmaterial für den Glaskörper eine Suspension eingesetzt, die $SiO_2$-Partikel eines Durchmessers im Bereich von 10 bis 500 nm, vorzugsweise 15 bis 100 nm, mit einem mittleren Teilchendurchmesser von 40 nm bei einem Feststoff:Wasser-Gewichtsverhältnis von 1:1 bis 2,5:1 enthält, wobei der Suspension ein ionogener Zusatzstoff zugegeben wird, der den pH-Wert der Suspension in den sauren (pH < 3) oder in Richtung auf den basischen Bereich (pH 0,5 bis 8) verschiebt. Hiermit ist der Vorteil verbunden, daß sich bei Zusatz von 0,2 bis 5 Gew.%, bezogen auf den Feststoffanteil der Suspension, eines ionogenen Zusatzstoffes ein besonders hoher Thixotropieeffekt ergibt und daß aus einem solchen Ausgangsmaterial Grünkörper erreicht werden können mit einer vorteilhaft hohen Dichte, wie sie für einen späteren, effizienten Sinterprozeß des Grünkörpers wünschenswert ist.

Bei insbesondere wässerigen Suspensionen aus submikroskopischen $SiO_2$-Teilchen eines Teilchendurchmessers von 10 bis 500 nm, vorzugsweise 15 bis 100 nm, tritt durch Zusatz von 0,2 bis 5 Gew.% (bezogen auf den Feststoffanteil der Suspension) einer ionogenen Substanz, die den pH-Wert der Suspension in den sauren (pH < 3) oder in Richtung auf den basischen Bereich (pH 5,5 bis 8) verschiebt, ein besonders hoher Thixotropieeffekt ein, der dazu ausgenutzt werden kann, das Ausgangsmaterial für den herzustellenden Glaskörper durch Einwirkung mechanischer Kräfte, vorzugsweise Schall oder Ultraschall, zu verflüssigen und es im verflüssigten Zustand zu homogenisieren und zu verdichten und gleichzeitig zu verformen, wobei die vorgenommene Verformung erhalten bleibt, da sich das Ausgangsmaterial aufgrund des Thixotropieeffektes wieder verfestigt.

Nach einer weiteren vorteilhaften Ausgestaltung der Verfahrens nach der Erfindung wird als ionogener Zusatzstoff NH₃ in wässeriger Lösung eingesetzt. Dieser Zusatzstoff ist leicht flüchtig und ist in einem nachfolgenden Reinigungs-Erhitzungsschritt rückstandslos aus dem Grünkörper zu entfernen, so daß Quarzglaskörper einer hohen Reinheit herstellbar sind.

Wird der Suspension nach einer weiteren vorteilhaften Ausgestaltung des Verfahrens nach der Erfindung eine solche Menge an ionogenem Zusatzstoff zugesetzt, daß eine hochviskose feste Masse entsteht, ergibt sich der Vorteil, daß das Ausgangsmaterial vor seiner Verflüssigung durch Einkopplung mechanischer Kräfte zunächst mittels Walzen, Knetern oder dergleichen effizient homogenisiert und z.B. mittels Schneckenförderen im homogenisierten Zustand in eine Formgebungsvorrichtung befördert werden kann.

Nach einer weiteren vorteilhaften Ausgestaltung des Verfahrens nach der Erfindung wird das Ausgangsmaterial durch Einwirkung von Schall (Frequenz f=20-200 Hz) oder Ultraschall (Frequenz f=20-50 kHz) verflüssigt. Eine Gel-Sol-Umwandlung tritt bei thixotropen Systemen bei jeder Art mechanischer Einwirkung, z.B. auch Rühren oder Schütteln, ein. Wird jedoch ein Schall- oder Ultraschallschwinger eingesetzt, dessen Amplitude so bemessen ist, daß das Schall- bzw. Ultraschallfeld in das zu verflüssigende Ausgangsmaterial eingekoppelt wird, ergibt sich eine besonders wirkungsvolle Auflösung von Packungshohlräumen im Ausgangsmaterial (Gasblasen steigen in dem verflüssigten Ausgangsmaterial nach oben). Ein solches Entgasen kann z.B. durch Verflüssigen des Ausgangsmaterials im Vakuum noch beschleunigt werden.

Nach einer weiteren vorteilhaften Ausgestaltung des Verfahrens nach der Erfindung wird das Ausgangsmaterial in einer Vorrichtung mit einem Behälter, in der das Ausgangsmaterial verflüssigt wird und mit einer Austrittsöffnung die die Form des herzustellenden Glaskörpers bestimmt, verformt.

Hiermit ist der Vorteil verbunden, daß z.B. Rohre oder Stäbe in einem kontinuierlichen Schlickerfließprozeß erzeugt werden können.

Wird das Ausgangsmaterial dagegen entsprechend einer weiteren vorteilhaften Ausgestaltung des Verfahrens nach der Erfindung in einer verlorenen Form, die nach Verfestigung des Ausgangsmaterials zerstört wird, zunächst verflüssigt und dann in dieser Form durch Abkopplung von den die Verflüssigung bewirkenden mechanischen Kräften verfestigt, können Formen, z.B. Kunststoffschläuche, eingesetzt werden, die zu einer besonders glatten spiegelnden Oberfläche des Grünkörpers mit einer Oberflächenrauhigkeit von ≦ 1μm, vorzugsweise sogar von ≦ 0,5 μm führen. Oberflächen mit so geringen Oberflächenrauhigkeiten erschweren eine störende Rekristallisation des gereinigten Grünkörpers beim Sinterprozeß. Es können als verlorene Form aber z.B. auch für Wassermoleküle permeable Schläuche, beispielsweise Schläuche, wie sie für Dialyseverfahren eingesetzt werden, verwendet werden, wodurch ermöglicht wird, daß die Trocknung des erhaltenen Grünkörpers durch Verdampfen des Wasseranteiles vorgenommen werden kann.

Die mit die Erfindung erzielbaren Vorteile bestehen weiter insbesondere darin, daß für die Herstellung von Glaskörpern, insbesondere Vorformen für optische Wellenleiter, mit einem sehr geringen apparativen Aufwand Grünkörper erhalten werden können, die einerseits porös genug sind, daß Verunreinigungen, insbesondere Wasser und Übergangsmetalle, in einer erhitzten Gasatmosphäre wirkungsvoll entfernt werden können, die andererseits jedoch eine so hohe Dichte und Homogenität aufweisen, daß sie ohne weitere Zwischenbearbeitungsschritte, wie z.B. isostatisches Heißpressen, zu hochreinen Glaskörpern gesintert werden können.

Mit einem auf diese Weise aufbereiteten, unter Ausnutzung des Thixotropieeffektes verflüssigten Ausgangsmaterial lassen sich auf besonders einfache Weise in einem kontinuierlichen Prozeß geformte Grünkörper praktisch drucklos verformen. Das vorliegende Verfahren sowie die vorliegenden Vorrichtungen unterscheiden sich damit grundlegend von bekannten Strangpreßverfahren.

Ein weiterer Vorteil liegt darin, daß auch Grünkörper hergestellt werden können, die einen von einem kreisförmigen Querschnitt abweichenden Querschnitt haben; zu denken ist z.B. an eckige Rohre oder Stäbe.

Ausführungsbeispiele der Erfindung sind in der Zeichnung dargestellt und werden im folgenden näher beschrieben. Es zeigen:

Figur 1a, 1b Vorrichtung zur Durchführung des Verfahrens nach der Erfindung im Schnitt in zwei unterschiedlichen Prozeßstufen,

Figur 2 eine weitere Vorrichtung zur Durchführung des Verfahrens nach der Erfindung im Schnitt,

Figur 3 eine weitere Vorrichtung zur Durchführung des Verfahrens nach der Erfindung im Schnitt.

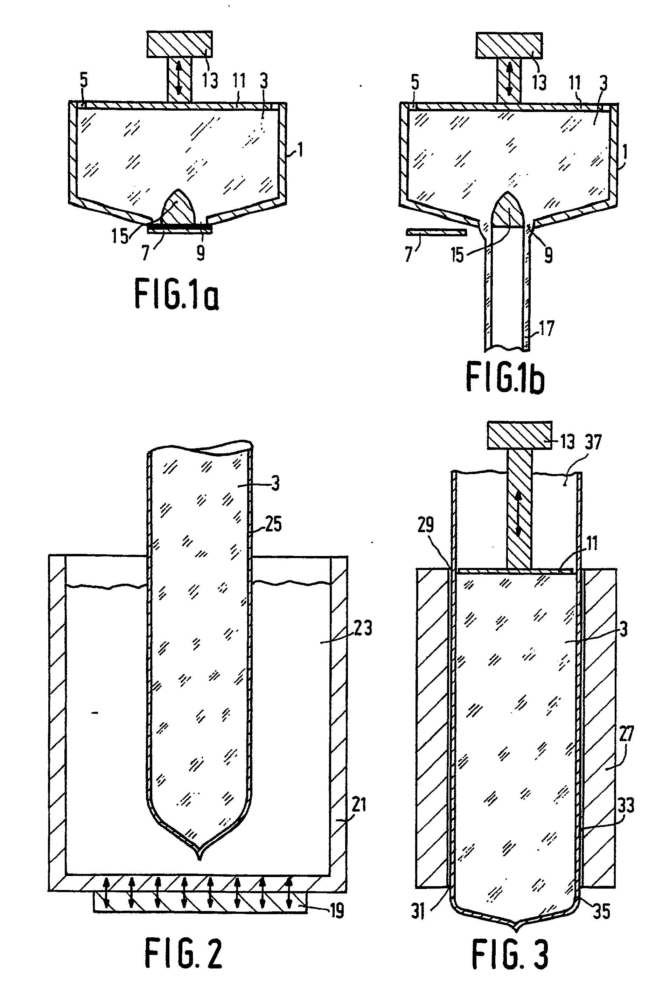

Eine Ausführung des erfindungsgemäßen Verfahrens wird zunächst anhand der Figuren 1a und 1b beschrieben. In einen Behälter 1 mit einer Einfüllöffnung 5 und mit einer Austrittsöffnung 9 wird hochviskoses, in einem Kneter homogenisiertes Ausgangsmaterial 3 eingefüllt und mit einem, in die Einfüllöffnung 5 hineinpassenden Stempel 11 formschlüssig in Kontakt gebracht, der mit einem Schall- (f=50 Hz) oder Ultraschallgenerator 13 (f=35 kHz) gekoppelt ist. In der Figur ist die Vorrichtung mit einem inneren Kern 15 für die Herstellung von rohrförmigen Grünkörpern dargestellt; wird der innere Kern 15 weggelassen, lassen sich stabförmige Grünkörper herstellen. Über den Schall- oder Ultraschallgenerator 13 wird ein Schall- bzw. Ultraschallfeld in das hochviskose Ausgangsmaterial 3 eingekoppelt, das dadurch so geschert wird, daß das Minimum der Viskosität erreicht wird. Wichtig dabei ist, daß die Amplitude des Schall- oder Ultraschallgenerators ausreicht, um das Schall- bzw. Ultraschallfeld in das Ausgangsmaterial formschlüssig einzukoppeln. Die hierzu erforderlichen Maßnahmen fallen in den Bereich des fachmännischen Handelns. In dem durch mechanische Kräfte verflüssigten Ausgangsmaterial können sich Packungshohlräume leicht auflösen, es steigen z.B. Gasblasen auf; dieser Vorgang läßt sich durch Anlegen von Vakuum noch beschleunigen, eine Vakuumvorrichtung ist in den Figuren 1a und 1b nicht gesondert dargestellt. Nachdem das Ausgangsmaterial 3 einen homogenen, niedrigviskosen Zustand erreicht hat, wird ein Verschluß 7 vor der Austrittsöffnung 9 geöffnet und das verflüssigte Ausgangsmaterial 3 fließt drucklos aus der Austrittsöffnung 9 aus (vergleiche Figur 1b). Die Austrittsöffnung 9 hat einen Querschnitt, die den Querschnitt des herzustellenden Grünkörpers bestimmt; in der Figur ist ein rohrförmiger Grünkörper 17 dargestellt. Der Stempel 11 wird so nachgeführt, daß stets eine gute formschlüssige Ankopplung an das im Behälter 1 befindliche Ausgangsmaterial 3 gewährleistet ist. Durch die abnehmende Kopplung vom Schall- bzw. Ultraschallfeld des austretenden Grünkörpers 17 erfolgt ausreichend schnell eine solche Verfestigung durch Erhöhung der Viskosität, daß die Form des Grünkörpers 17 stabilisiert wird. Dadurch, daß keine gescherten Teilchen im Grünkörper 17 mehr vorliegen, ist dieser so fest, daß er sich ohne Probleme handhaben und transportieren läßt. Bevor die noch feuchten Grünkörper in Form von z.B. Stäben oder Rohren weiterverarbeitet werden können, muß ein Trocknungsprozeß so vorsichtig durchgeführt werden, daß keinerlei Rißbildung erfolgt. Dies ist bekannterweise durch langsames Trocknen an Luft, durch Erwärmung bei anfänglich hoher Luftfeuchtigkeit und Lösungsmittelaustausch, möglich. Anschließend erfolgt eine Reinigung des getrockneten Grünkörpers bei 600 bis 900°C in chlorhaltiger Atmosphäre, an die sich die Sinterung zu transparentem Glas bei ungefähr 1500°C in Heliumatmosphäre mit ca. 2 Vol% Chlorgaszusatz anschließt. Eine Vorform, aus der optische Wellenleiter ausgezogen werden können mit einem Stufenprofil des Brechungsindex kann durch Verarbeitung von Rohren mit unterschiedlichen Dotierungen oder durch Einschmelzen eines dotierten Stabes in undotierte Mantelglasrohre erhalten werden. Ebenfalls ist es möglich, einen optischen Wellenleiter mit W-Profil des Brechungsindex durch zusätzliche Verwendung eines Zwischenrohres mit niedrigerem Brechungsindex, der durch entsprechende Dotierung erhalten wird, herzustellen. Eine weitere Anwendung können auf die beschriebene Weise hergestellte Quarzglasrohre als Lampenkolben bei der Herstellung von Halogen- und Gasentladungslampen finden, denn Gläser hierfür müssen, ebenso wie die Gläser für optische Wellenleiter, nahezu wasserfrei sein und einen hohen Siliciumdioxidgehalt aufweisen.

Bei der Sinterung von Grünkörpern hat sich herausgestellt, daß die störende Rekristallisation verhindert werden kann, wenn die Oberfläche des Grünkörpers nur sehr kleine Rauhigkeiten $\leq 1\mu m$, vorzugsweise $\leq 0,5\mu m$ aufweist.

Mit der oben beschriebenen einfachen Ausführungsform des Verfahrens und der Vorrichtung ist dies zwar zu erreichen, es können jedoch gewisse Schwierigkeiten dabei auftreten. Mit einer weiteren vorteilhaften Ausführung des Verfahrens und einer abgewandelten Vorrichtung können diese Schwierigkeiten umgangen werden.

Dazu wird (vergleiche Figur 2) das Ausgangsmaterial 3 für den herzustellenden Glaskörper mittels z.B. eines Schneckenextruders (in der Figur nicht dargestellt) in eine verlorene Form 25 in Form eines glattwandigen Schlauches z.B. eines Durchmessers von 24 mm und einer Wandstärke von 20 $\mu m$ aus Kunststoff gedrückt. Die Form 25 wird nach dem Füllen in ein Ultraschallbad mit einem Gefäß 21 und einem, mit dem Gefäß 21 verkoppelten Schall- oder Ultraschallgenerator 19 und einem Schallübertragungsmedium 23, z.B. Wasser, gehalten. Ein für diese Zwecke geeigneter Schallgenerator arbeitet bei einer Frequenz f=50 Hz; ein geeigneter Ultraschallgenerator arbeitet bei einer Frequenz f=35 kHz. In einem solchen Scherfeld kann wiederum das Minimum der Viskosität im Ausgangsmaterial 3 erreicht werden. Da eventuell vorhandene Packungshohlräume sich leicht auflösen können, es entweichen Gasblasen, läßt sich ein sehr homogener Grünkörper erreichen, der eine spiegelnde Oberfläche entsprechend der Innenwandung des Schlauches hat. Die Verdichtung des Feststoffanteils im Ausgangsmaterial 3 durch Entfernen eingeschlossener Gase kann durch Anwendung von Vakuum unterstützt werden. Eine Evakuierungseinrichtung ist in Figur 2 nicht gesondert dargestellt.

Eine Weiterverarbeitung (Trocknung) des in der Form 25 verflüssigten, verdichteten und wieder verfestigten Ausgangsmaterials 3 kann anschließend auf bekannte Weise erfolgen, nachdem der Kunststoffschlauch chemisch oder mechanisch entfernt wurde.

Der auf diese Weise erhaltene Grünkörper, der eine Dichte von 40 bis 60% des kompakten Quarzglases aufweist, bleibt rißfrei und wird anschließend, wie oben beschrieben, zu klarem Glas gesintert.

Rohre lassen sich in gleicher Weise herstellen, wenn dazu z.B. ein weiterer, gespannter Innenschlauch mit einem kleineren Durchmesser als der Durchmesser der verlorenen Form 25 konzentrisch innerhalb der Form 25 angebracht wird. Der Innenschlauch wird durch leichten Überdruck stabilisiert. Nach dem Verfestigen des Ausgangsmaterials und Ablassen des Überdrucks läßt sich der Innenschlauch entfernen und ein rohrförmiger Grünkörper wird, wie an anderer Stelle beschrieben, weiterbearbeitet.

In einer weiteren Ausführungsform des Verfahrens nach der Erfindung unter Anwendung einer abgewandelten Vorrichtung, wie sie in Figur 3 dargestellt ist, läßt sich der erhaltene Grünkörper auch in der Form in relativ kurzer Zeit trocknen. Hierzu wird in eine Form 27, die der Form des herzustellenden Glaskörpers entspricht und die eine Einfüllöffnung 29 und eine vertikal gegenüberliegende Austrittsöffnung 31 hat, ein einseitig verschlossenes Futter 35 aus einem für Wassermoleküle permeablen Material eingebracht. Als Futter 35 kann mit Vorteil ein Dialyseschlauch eingesetzt werden. Das Futter 35 liegt eng an der Innenwandung 33 der Form 27 an und wird mit dem zu verflüssigenden Ausgangsmaterial 3 gefüllt. An seinem oberen, offenen Ende 37 wird das Futter 35 mit einem, das Ausgangsmaterial 3 formschlüssig kontaktierenden Stempel 11, der mit einem Schallgenerator einer Frequenz f=50 Hz oder Ultraschallgenerator 13 einer Frequenz f=35 kHz verkoppelt ist, abgeschlossen. Als Form wurde für dieses Ausführungsbeispiel ein offenes teilbares Rohr aus Edelstahl eines Innendurchmessers von 21 nm eingesetzt. Die Innenwandung der Form 27 ist zweckmäßigerweise poliert. Durch die Einkopplung des Schall- oder Ultraschallfeldes wird durch Scherung eine Verflüssigung des im Futter 35 befindlichen Ausgangsmaterials 3 erreicht. Nach Abschalten des Schall- oder Ultraschallgenerators wird das nach kurzer Zeit verfestigte Ausgangsmaterial 3 im Futter 35 aus der Form entnommen und im Futter 35 getrocknet. Nach dem Trocknen läßt sich das Futter 35 entfernen und der erhaltene Grünkörper, wie an anderer Stelle beschrieben, zu klarem Glas sintern.

Bei der Herstellung des über einen Thixotropieeffekt zu verflüssigenden Ausgangsmaterials zur Herstellung von hochreinen Quarzglaskörpern hat es sich als besonders günstig erwiesen, SiO$_2$-Teilchen eines mittleren Teilchendurchmessers von 40 nm in einer wässerigen Suspension, bei der das Feststoff-Wasser-Gewichtsverhältnis 1:0,53 beträgt, aufzuschlämmen. Dieser Suspension werden 0,75 Gew.%, bezogen auf den Feststoffgehalt der Suspension eines ionogenen Zusatzstoffes, der den pH-Wert der Suspension in Richtung auf den alkalischen Bereich (pH≈7,5) verschiebt, beigegeben. Als ionogener Zusatzstoff wurde für dieses Ausführungsbeispiel eine wässerige, 25%ige Ammoniaklösung zugegeben. Zur Verfestigung des herzustellenden Grünkörpers kann ein Zusatz im Prozentbereich, bezogen auf den Feststoffanteil der Suspension, eines Bindemittels, z.B. Polyvenylalkohol, vorteilhaft sein; der Zusatz eines Bindemittels ist jedoch nicht unbedingt erforderlich.

In einem praktischen Ausführungsbeispiel unter Anwendung einer Vorrichtung nach Figur 2 wurde wie folgt verfahren:
In einem Kneter werden 500g von im Handel erhältlichem, pyrogenem SiO$_2$ einer mittleren Teilchengröße von 40 nm in 250 ml Wasser und 15 ml wässeriger Ammoniaklösung (25%) dispergiert, bis eine homogene, knetbare Masse erreicht wird. Über einen Schneckenextruder wird ein Teil dieser hochviskosen Masse in einen PVC-Schlauch mit einem Durchmesser von 20 mm gedrückt und dann in ein mit Wasser gefülltes hohes Glasgefäß gestellt, das in einem, im Handel erhältlichen, Hochleistungsultraschallgerät (f=35 kHz) steht. Nachdem die Masse 15 Minuten im Ultraschallfeld geschert und dünnflüssig geworden und damit homogenisiert ist, wird sie mitsamt dem PVC-Schlauch aus der Vorrichtung entfernt und mit einer Tauchgeschwindigkeit von 5 cm/min in flüssigen Stickstoff getaucht. Infolge des Thixotropieeffektes erstarrt die Masse im Schlauch nach kurzer Zeit und ist bereits vor dem Abkühlprozeß verfestigt. Nach einer Temperatur von < 100 K wird der spröde PVC-Schlauch abgeblättert und der erhaltene Grünkörper in ein Glasgefäß gestellt, das mit Eiswasser umgeben ist. Die den Grünkörper umgebende Luft wird so lange durch Pumpen ausgewechselt, bis nahezu alles Wasser aus dem Grünkörper entfernt ist. Nach einer langsamen Trocknung über eine Dauer von 24 h wird der getrocknete Grünkörper mit einer Dichte von 52%, bezogen auf die Dichte kompakten Quarzglases, in 100 min auf eine Temperatur von 800°C erhitzt und über eine Dauer von 1,5 h in einer strömenden Sauerstoffatmosphäre mit 6 Vol% Chlorgaszusatz gereinigt. Bei diesem Reinigungsprozeß werden Verunreinigungen in Form von Wasser und Übergangsmetallen weitgehend entfernt; sie liegen im gereinigten Grünkörper nur noch im ppb-Bereich vor. Die anschließende Sinterung zu einem blasen- und schlierenfreien Quarzglaskörper erfolgt bei 1500°C in Heliumatmosphäre mit 2 Vol% Chlorgaszusatz, wobei der Grünkörper mit einer Absenkgeschwindigkeit von 3mm/min durch den Ofen geführt wird. Es wird ein transparenter Glasstab eines Durchmessers von 14 mm mit Verunreinigungen ≦ 50 ppb erhalten. Der Glaskörper hatte eine Dichte von 2,20 g/cm³, und einen Brechungsindex $n_D$≈1,4598.

Bezugszeichenliste

1 Behälter
3 Ausgangsmaterial
5 Einfüllöffnung
7 Abdeckteil
9 Austrittsöffnung
11 Stempel
13 Schall-/Ultraschallgenerator
15 Kern
17 Grünkörper
19 Schall-/Ultraschallgenerator
21 Gefäß
23 Schallübertragungsmedium
25 verlorene Form
27 Form
29 Einfüllöffnung
31 Austrittsöffnung
33 Innenwandung von 27
35 Futter
37 oberes Ende von 35

**Patentansprüche**

1. Verfahren zur Herstellung von Glaskörpern, bei dem aus dem Ausgangsmaterial (3) für den Glaskörper in Form einer Suspension ein poröser Grünkörper (17) geformt und dieser anschließend getrocknet, gereinigt und gesintert wird, dadurch gekennzeichnet, daß das Ausgangsmaterial in Form einer thixotropen Suspension in einem Formwerkzeug durch Einkopplung mechanischer Kräfte verflüssigt und danach der Einwirkung der mechanischen Kräfte entzogen wird, wonach das Ausgangsmaterial wieder verfestigt und in nunmehr geformtem Zustand als Grünkörper vorliegt.

2. Verfahren nach Anspruch 1, dadurch gekennzeichnet, daß als Ausgangsmaterial (3) für den Glaskörper eine Suspension eingesetzt wird, die $SiO_2$-Partikel eines Durchmessers im Bereich von 10 bis 500 nm, vorzugsweise 15 bis 100 nm, mit einem mittleren Teilchendurchmesser von 40 nm enthält.

3. Verfahren nach Anspruch 1 oder 2, dadurch gekennzeichnet, daß als Dispergierflüssigkeit Wasser eingesetzt wird.

4. Verfahren nach einem der Ansprüche 1 bis 3, dadurch gekennzeichnet, daß eine Suspension mit einem Feststoff:Wasser-Gewichtsverhältnis von 1:1 bis 2,5:1 eingesetzt wird.

5. Verfahren nach einem der Ansprüche 1 bis 4, dadurch gekennzeichnet, daß der Suspension ein ionogener Zusatzstoff zugegeben wird, der den pH-Wert der Suspension in den sauren Bereich (pH < 3) verschiebt.

6. Verfahren nach Anspruch 5, dadurch gekennzeichnet, daß als Zusatzstoff Salzsäure HCl eingesetzt wird.

7. Verfahren nach einem der Ansprüche 1 bis 4, dadurch gekennzeichnet, daß der Suspension ein basisch reagierender ionogener Zusatzstoff zugegeben wird, der den pH-Wert der Suspension in den Bereich pH ≈ 5,5-8 verschiebt.

8. Verfahren nach Anspruch 7, dadurch gekennzeichnet, daß als Zusatzstoff eine Ammoniumverbindung eingesetzt wird, insbesondere $NH_3$ in wässeriger Lösung.

9. Verfahren nach einem der Ansprüche 1 bis 8, dadurch gekennzeichnet, daß der Suspension eine solche Menge an ionogenem Zusatzstoff zugesetzt wird, daß ein hochviskoses, festes Gel entsteht.

10. Verfahren nach Anspruch 9, durch gekennzeichnet, daß der ionogene Zusatzstoff in einer Menge von 0,2 bis 5 Gew.%, bezogen auf den Feststoffanteil der Suspension, zugegeben wird.

11. Verfahren nach Anspruch 10, dadurch gekennzeichnet, daß als Ausgangsmaterial (3) eine wässerige Suspension eingesetzt wird, die $SiO_2$-Partikel eines mittleren Teilchendurchmessers von 40 nm bei einem Feststoff:Wasser-Gewichtsverhältnis von 1:0,53 enthält und der als ionogener Zusatzstoff eine wässerige 25%ige Ammoniaklösung in einer Menge von 0,75 Gew.%, bezogen auf den Feststoffanteil der Suspension, zugegeben ist.

12. Verfahren nach Anspruch 1, dadurch gekennzeichnet, daß das Ausgangsmaterial (3) durch Einwirkung von Schall (Frequenz f=20-200 Hz) oder Ultraschall (Frequenz f=20-50 kHz) verflüssigt wird.

13. Verfahren nach einem der Ansprüche 1 bis 12, dadurch gekennzeichnet, daß das Ausgangsmaterial (3) in einer Vorrichtung mit einem Behälter (1), in dem es verflüssigt wird und mit einer Austrittsöffnung (9), die die Form des herzustellenden Glaskörpers bestimmt, verformt wird.

14. Verfahren nach einem der Ansprüche 1 bis 12, dadurch gekennzeichnet, daß das Ausgangsmaterial (3) in einer Form (27), die der Form des herzustellenden Glaskörpers entspricht, verflüssigt und anschließend in dieser Form verfestigt wird.

15. Verfahren nach Anspruch 14, dadurch gekennzeichnet, daß eine verlorene Form (25) eingesetzt wird, die nach Verfestigung des Ausgangsmaterials (3) zerstört wird.

16. Verfahren nach Anspruch 15, dadurch gekennzeichnet, daß als verlorene Form (25) ein Kunststoffschlauch eingesetzt wird.

17. Vorrichtung zur Durchführung des Verfahrens nach den Ansprüchen 1 bis 16 mit einem Behälter (1) für die Aufnahme von Ausgangsmaterial (3) zur Herstellung eines Glaskörpers mit einer Einfüllöffnung (5) und mit einer der Einfüllöffnung vertikal gegenüberliegenden Austrittsöffnung (9) für das im Behälter befindliche Material mit einem Querschnitt, der die Form des herzustellenden Grünkörpers bestimmt, und mit einem, in die Einfüllöffnung hineinpassenden Stempel (11), der das im Behälter befindliche Ausgangsmaterial formschlüssig kontaktiert und der in Richtung auf die Austrittsöffnung verschiebbar ist, gekennzeichnet durch eine mit einem Abdeckteil (7) verschließbare Austrittsöffnung (9) und einen mit einem Schall- oder Ultraschallgenerator (13) gekoppelten Stempel (11).

18. Vorrichtung nach Anspruch 17, dadurch gekennzeichnet, daß innerhalb der Austrittsöffnung (9) ein Kern (15) vorgesehen ist zur Ausbildung eines rohrförmigen Grünkörpers (17).

19. Vorrichtung zur Durchführung des Verfahrens nach den Ansprüchen 1 bis 16 gekennzeichnet durch ein mit einem Schall- oder Ultraschallgenerator (19) verkoppeltes Gefäß (21), das ein Medium (23) enthält, in das ein Schall- oder Ultraschallfeld einkoppelbar ist, in welches eine die Form des herzustellenden Grünkörpers bestimmende Form (25) zur Aufnahme von Ausgangsmaterial (3) einbringbar ist.

20. Vorrichtung nach Anspruch 19, dadurch gekennzeichnet, daß die Form (25) ein einseitig verschlossener Kunststoffschlauch ist.

21. Vorrichtung zur Durchführung des Verfahrens nach den Ansprüchen 1 bis 16 gekennzeichnet durch eine die Form des herzustellenden Glaskörpers bestimmende Form (27) mit einer Einfüllöffnung (29), mit einer der Einfüllöffnung vertikal gegenüberliegenden Austrittsöffnung (31), mit einem, an der Innenwandung (33) der Form (27) anliegenden, an seinem unteren Ende an der Austrittsöffnung der Form verschlossenen Futter (35), in das Ausgangsmaterial (3) für den Glaskörper einfüllbar ist und das an seinem oberen, offenen Ende (37) mit einem in das Futter hineinpassenden, mit einem Schall- oder Ultraschallgenerator (13) verkoppelten, das Ausgangsmaterial formschlüssig kontaktierenden Stempel (11) abschließbar ist.

22. Vorrichtung nach Anspruch 21, dadurch gekennzeichnet, daß das Futter (35) ein für Wassermoleküle permeabler Schlauch ist.

23. Verfahren nach den Ansprüchen 1 bis 16, dadurch gekennzeichnet, daß die hergestellten Glaskörper als Vorform für optische Wellenleiter eingesetzt werden.

24. Verfahren nach den Ansprüchen 1 bis 16, dadurch gekennzeichnet, daß die hergestellten Glaskörper als Vorform für Lampenkolben, insbesondere von Halogen- oder Gasentladungslampen, eingesetzt werden.

## Claims

1. A method for the manufacture of glass bodies, in which method a suspension, being the starting material (3) for the glass body, is used to form a porous green body (17) which is subsequently dried, purified and sintered, characterized in that the starting material in the form of a thixotropic suspension is liquefied in a mould by subjecting it to mechanical forces, and subsequently freeing it of the influence of the said forces, after which it solidifies again to form a green body.

2. A method as claimed in Claim 1, characterized in that a suspension is used as the starting material (3) for the glass body, which comprises $SiO_2$ particles having a diameter in the range from 10 to 500 nm, preferably from 15 to 100 nm, and an average particle diameter of 40 nm.

3. A method as claimed in Claim 1 or 2, characterized in that water is used as the dispersing fluid.

4. A method as claimed in Claim 1 up to and including 3, characterized in that a suspension is used having a weight ratio between solid matter and water which ranges from 1:1 to 2.5:1.

5. A method as claimed in any one of the Claims 1 up to and including 4, characterized in that an ionogenic additive is added to the suspension, which moves the pH-value of the suspension towards acidity (pH < 3).

6. A method as claimed in Claim 5, characterized in that hydrochloric acid HCl is used as the additive.

7. A method as claimed in any one of the Claims 1 up to and including 4, characterized in that an alkaline ionogenic additive is added to the suspension causing the pH-valve of the suspension to move towards the range from pH ≈ 5.5 - 8.

8. A method as claimed in Claim 7, characterized in that an ammonia compound is used as an additive, particularly $NH_3$ in an aqueous solution.

9. A method as Claimed in any one of the Claims 1 up to and including 8, characterized in that such a quantity of ionogenic additive is added to the suspension that a very viscous, solid gel is obtained.

10. A method as claimed in Claim 9, characterized in that the ionogenic additive is added in a quantity of 0.2 to 5 % by weight of the solids content of the suspension.

11. A method as claimed in Claim 10, characterized in that an aqueous suspension is used as the starting material (3), which comprises $SiO_2$ particles having an average diameter of 40 nm and a weight ratio between solid matter and water of 1:0.53, and to which suspension an aqueous 25 % ammonia solution is added by way of ionogenic additive in a quantity corresponding to 0.75 % by weight of the solids content of the suspension.

12. A method as claimed in Claim 1, characterized in that the starting material (3) is liquefied by the application of sound (frequency f = 20-200 Hz) or ultrasonics (frequency f = 20-50 kHz).

13. A method as claimed in any one of the Claims 1 up to and including 12, characterized in that the starting material (3) is deformed in an arrangement comprising a receptacle (1) in which the said starting material is liquefied and which is provided with an outlet (9) which determines the shape of the glass body to be manufactured.

14. A method as claimed in any one of the Claims 1 up to and including 12, characterized in that the starting material (3) is liquefied and subsequently solidified in a mould (27) which corresponds to the shape of the glass body to be produced.

15. A method as claimed in Claim 14, characterized in that a disposable mould (25) is used which is destroyed after the starting material (3) has solidified.

16. A method as claimed in Claim 15, characterized in that a synthetic-resin hose is used as the disposable mould (25).

17. An arrangement for carrying out the method as claimed in Claims 1 up to and including 16, comprising a receptacle (1) for holding the starting material (3) for the manufacture of a glass body, which receptacle has a feed opening (5) and perpendicularly opposite thereof an outlet (9) for the material in the receptacle, said outlet having a cross-section which determines the shape of the green body to be produced, said arrangement also having a plunger (11) which fits in the feed opening and matchingly contacts the starting material in the receptacle and can be moved towards the outlet, characterized by an outlet (9) which can be closed by a cover (7), and a plunger (11) which is coupled to a sound generator or ultrasonic generator (13).

18. An arrangement as claimed in Claim 17, characterized in that for the formation of a tubular green body (17), a core (15) is provided inside the outlet (9).

19. An arrangement for carrying out the method as claimed in Claims 1 up to and including 16, characterized by a vessel (21) which is coupled to a sound generator or ultrasonic generator (19) and which comprises a medium (23) to which a sound field or ultrasonic field can be applied, in which medium a mould (25) for holding the starting material (3) can be introduced, which mould defines the shape of the green body to be produced.

20. An arrangement as claimed in Claim 19, characterized in that the mould (25) is a synthetic resin hose which is closed at one end.

21. An arrangement for carrying out the method as claimed in Claims 1 up to and including 16, characterized by a mould (27) which defines the shape of the glass body to be produced, which mould has a feed opening (29) and perpendicularly opposite thereof an outlet (31), and a lining (35) which is in contact with the inner wall (33) of the mould (27) and which is closed at its bottom end at the location of the outlet of the mould, in which lining-bounded space the starting material (3) for the glass body can be introduced and which can be closed at its open upper end (37) by a plunger (11) which fits in the lined mould, thereby matchingly contacting the starting material, and which is coupled to a sound generator or ultrasonic generator (13).

22. An arrangement as claimed in Claim 21, characterized in that the lining (35) is a waterpermeable hose.

23. A method as claimed in Claims 1 up to and including 16, characterized in that the glass bodies are used as preforms for optical waveguides.

24. A method as claimed in Claims 1 up to and including 16, characterized in that the glass bodies produced are used as preforms for lamp envelopes, in particular of halogen lamps and gas-discharge lamps.

**Revendications**

1. Procédé pour la fabrication de corps en verre selon lequel un semi-produit poreux est formé à partir du matériau de départ (3) pour le corps en verre (17) sous forme d'une suspension et ensuite séché, nettoyé et fritté, caractérisé en ce que le matériau de départ sous forme d'une suspension thixotrope est liquéfié dans un outil de formage par couplage de forces mécaniques et ensuite soustrait à l'effet des forces mécaniques, après quoi le matériau de départ est résolidifié et présent dans une forme maintenant formée comme semi-produit.

2. Procédé selon la revendication 1, caractérisé en ce que comme matériau de départ (3) pour le corps en verre on utilise une suspension contenant des particules de $SiO_2$ d'un diamètre situé dans la gamme de 10 à 500 nm, de préférence 15 à 100 nm, le diamètre moyen des particules étant de 40 nm.

3. Procédé selon la revendication 1 ou 2, caractérisé en ce que l'eau est utilisée comme dispersant.

4. Procédé selon l'une des revendications 1 à 3, caractérisé en ce qu'on utilise une suspension présentant un rapport en poids substance solide : eau de 1 : 1 à 2,5 : 1.

5. Procédé selon l'une des revendications 1 à 4, caractérisé en ce que la suspension est additionnée d'un additif ionogène qui décale la valeur pH de la suspension dans la gamme acide (pH < 3).

6. Procédé selon la revendication 5, caractérisé en ce que l'acide chlorhydrique HCl est utilisé comme additif.

7. Procédé selon l'une des revendications 1 à 4, caractérisé en ce que la suspension est additionnée d'un additif ionogène à réaction basique qui décale la valeur pH de la suspension dans la gamme pH ≈ 5,5 à 8.

8. Procédé selon la revendication 7, caractérisé en ce qu'un composé d'ammonium, notamment $NH_3$ en solution aqueuse est utilisé comme additif.

9. Procédé selon l'une des revendications 1 à 8, caractérisé en ce que la suspension est additionnée d'une quantité d'additif ionogène telle qu'il se forme un gel solide très visqueux.

10. Procédé selon la revendication 9, caractérisé en ce que l'addition ionogène est ajouté dans une quantité de 0,2 à 5% en poids rapportée à la part de substance solide de la suspension.

11. Procédé selon la revendication 10, caractérisé en ce que comme matériau de départ (3) on utilise une suspension aqueuse contenant des particules de $SiO_2$ d'un diamètre moyen des particules de 40 nm pour un rapport en poids substance solide : eau de 1 : 0,53 et additionnée, comme additif ionogène, d'une solution aqueuse à 25% d'ammoniaque dans une quantité de 0,75% en poids rapportée à la part de substance solide de la suspension.

12. Procédé selon la revendication 1, caractérisé en ce que le matériau de départ (3) est liquéfié par effet de sons (fréquence f = 20 à 200 Hz) ou d'ultrasons (fréquence f = 20 à 50 kHz).

13. Procédé selon l'une des revendications 1 à 12 caractérisé en ce que le matériau de départ (3) est déformé dans une dispositif muni d'un récipient (1), dans lequel il est liquéfié, et d'un orifice de sortie (9) qui détermine la forme du corps en verre à réaliser.

14. Procédé selon l'une des revendications 1 à 12, caractérisé en ce que le matériau de départ (3) est liquéfié dans un moule (27) dont la forme correspond à la forme du corps en verre à réaliser et ensuite solifié dans ce moule.

15. Procédé selon la revendication 14, caractérisé en ce qu'on utilise un moule perdu (25) qui est détruit après solidification du matériau de départ (3).

16. Procédé selon la revendication 15 caractérisé en ce qu'un tuyau de matière synthétique souple est utilisé comme moule perdu (25).

17. Dispositif pour la mise en œuvre du procédé selon la revendication 1 à 16 comportant un récipient (1) pour la réception du matériau de départ (3) pour la fabrication d'un corps en verre muni d'un orifice de remplissage (5) et d'un orifice de sortie (9) situé dans la direction verticale vis-à-vis de l'orifice de remplissage pour le matériau contenu dans le récipient présentant une section transversale qui détermine la forme du semi-produit à réaliser, et d'un poinçon (11) qui s'adapte dans l'orifice de remplissage et qui, grâce à sa forme, contacte le matériau de départ contenu dans le récipient et qui peut être déplacé dans la direction de l'orifice de sortie, caractérisé par un orifice de sortie (9) pouvant être fermé par un élément de recouvrement (7) et un poinçon (11) à coupler à un générateur de sons ou d'ultrasons (13).

18. Dispositif selon la revendication 17, caractérisé en ce que dans l'orifice de sortie (9) est prévu un noyau (15) pour la formation d'un semi-produit tubulaire (17).

19. Dispositif pour la mise en œuvre du procédé selon la revendication 1 à 16, caractérisé par un récipient (21) accouplé à un générateur de sons ou d'ultrasons (19) et contenant un milieu (23) dans lequel peut être couplé le champ sonore ou ultrasonore, dans lequel peut être introduit un moule (25) déterminant la forme du semi-produit à réaliser pour la réception du matériau de départ (3).

20. Dispositif selon la revendication 19, caractérisé en ce que le moule (25) est un tuyau souple en matière synthéthique dont une extrémité est fermée.

21. Dispositif pour la mise en œuvre du procédé selon la revendication 1 à 16, caractérisé par un moule (27) déterminant la forme du corps en verre à réaliser et muni d'un orifice de remplissage (29), d'un orifice de sortie (31) situé dans la direction verticale vis-à-vis de l'orifice de remplissage, d'un garnissage (35) qui s'applique contre la paroi intérieure (33) du moule (27) et dont l'extrémité inférieure à l'orifice de sortie du moule est fermée, garnissage dans lequel peut être introduit le matériau de départ (3) pour le corps en verre et dont l'extrémité supérieure ouverte (37) peut être fermée par un poinçon (11) qui s'adapte dans le garnissage et est accouplé à un générateur de sons ou d'ultrasons (13) et entre en contract, grâce à sa forme, avec le matériau de départ.

22. Dispositif selon la revendication 21, caractérisé en ce que le garnissage (35) est un tuyau souple perméable aux molécules d'eau.

23. Procédé selon les revendications 1 à 16, caractérisé en ce que les corps en verre réalisés sont utilisés comme préforme pour des guides d'ondes optiques.

24. Procédé selon les revendications 1 à 16, caractérisé en ce que les corps en verre réalisés sont utilisés comme préforme pour des ampoules de lampe, notamment des lampes à décharge dans le gaz ou à l'halogène.

FIG.1a

FIG.1b

FIG. 2

FIG. 3